# EUROPEAN PATENT APPLICATION

(11) **EP 3 506 481 A1**
(43) Date of publication of application: **03.07.2019**
(21) Application number: 18203844.8
(22) Date of filing: 31.10.2018
(51) Int. Cl.: H02M 3/335, H02M 3/156, H02M 3/158, H02M 3/07, H02M 1/00

(54) **DIRECT CURRENT-DIRECT CURRENT CONVERTER**

(30) Priority: 26.12.2017 CN 201711437559
(71) Applicant: Silergy Semiconductor Technology (Hangzhou) Ltd, Hangzhou, Zhejiang 310012 (CN)
(72) Inventor: ZHAO, Chen, ZHEJIANG, 310012 (CN); ZHANG, Wang, ZHEJIANG, 310012 (CN)
(74) Representative: Ström & Gulliksson AB

(57) **Abstract**

A direct current-direct current converter is provided. In the direct current-direct current converter, a switched capacitor converter is cascaded with at least one switch converter. In view of the feature that the switched capacitor converter includes multiple switch groups, the switch converter is configured to share at least one of the switch groups of the switched capacitor converter, which can effectively reduce the number of circuit components and increase utilization of the circuit components. In addition, the sharing of the switch group brings no negative effect on the operation of the switched capacitor converter, thus the DC-DC converter achieves an adjustable smoothing output voltage and an adjustable gain.

## Description

### FIELD

The present disclosure relates to the field of power electronic technology, and in particular to a direct current-direct current (DC-DC) converter.

### BACKGROUND

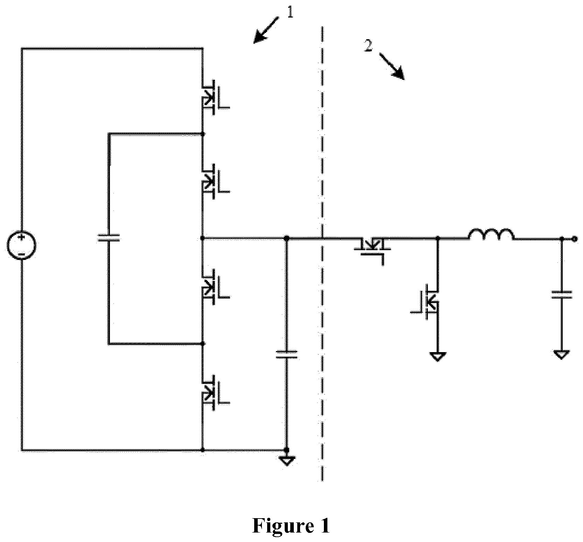

A switched capacitor converter performs voltage conversion or current conversion by controlling the charge/discharge of capacitors through switches. However, the switched capacitor converter only achieves voltage conversion with a constant transformation ratio. In addition, since there is high pulsation that is unexpected to be generated in the current of an input power supply and other devices, an obtained output voltage also has pulsation. In the conventional technology, in order to achieve a voltage conversion with a changeable transformation ratio between an input voltage and an output voltage and smooth the output voltage, a conventional switch converter is provided at a former stage or a later stage of the switched capacitor converter, which is coupled in series to the switched capacitor converter. As shown in Figure 1, a switched capacitor converter 1 is used as an input stage, and a switch converter 2 with a buck topology is used as an output stage. However, this may result in a large circuit scale.

### SUMMARY

In view of this, a DC-DC converter is provided according to embodiments of the present disclosure to decrease a circuit scale and increase elements utilization.

The DC-DC converter according to an embodiment of the present disclosure includes a switched capacitor converter and at least one switch converter.

The switched capacitor converter includes at least one switch group and at least one capacitor. Each of the at least one switch group includes two switches coupled in series.

Each of the at least one switch converter includes at least one primary magnetic circuit and is configured to share at least one of the switch groups. One terminal of the primary magnetic circuit is coupled to an intermediate node of the shared switch group. The intermediate node is a common coupling point of two switches of the shared switch group.

The switch converter is an unidirectional power converter.

In an embodiment, the DC-DC converter further includes a control circuit. The control circuit is configured to control the at least one shared switch group in a pulse width modulation (PWM) manner, a pulse frequency modulation (PFM) manner or a combination of the PWM manner and the PFM manner to adjust duty cycles of the two switches of the shared switch group, to adjust an output voltage of the DC-DC converter based on a voltage conversion of the switched capacitor converter.

In an embodiment, the switched capacitor converter is an isolated switched capacitor converter or a non-isolated switched capacitor converter.

In an embodiment, the switch converter is configured to share one of the switch groups.

In an embodiment, the at least one capacitor of the switched capacitor converter includes a first capacitor coupled with the shared switch group in parallel.

One terminal of the primary magnetic circuit is coupled to the intermediate node of the shared switch group, and another terminal of the primary magnetic circuit is coupled to one terminal of the shared switch group.

In an embodiment, the at least one capacitor of the switched capacitor converter includes a first series capacitor and a second series capacitor. The first series capacitor and the second series capacitor are coupled in series between two terminals of the shared switch group.

One terminal of the primary magnetic circuit is coupled to the intermediate node of the shared switch group, and another terminal of the primary magnetic circuit is coupled to a common coupling point of the first series capacitor and the second series capacitor.

In an embodiment, the switch converter further includes a primary switch group. The primary switch group and the shared switch group are coupled to the primary magnetic circuit in a full-bridge manner.

In an embodiment, the number of the at least one switch converter is N. The N switch converters are configured to respectively share N switch groups, N is greater than or equal to two.

In an embodiment, the at least one capacitor of the switched capacitor converter includes N first capacitors respectively coupled with the N shared switch groups in parallel.

One terminal of each of the at least one primary magnetic circuits is coupled to an intermediate node of the corresponding shared switch group, and another terminal of the primary magnetic circuit is coupled to one terminal of the shared switch group.

In an embodiment, the at least one capacitor of the switched capacitor converter includes N first series capacitors and N second series capacitors. An i-th first series capacitor and an i-th second series capacitor are coupled in series between two terminals of an i-th shared switch group, i=1,...,N.

One terminal of an i-th primary magnetic circuit is coupled to an intermediate node of the i-th shared switch group, and another terminal of the i-th primary magnetic circuit is coupled to a common coupling point of the i-th first series capacitor and the i-th second series capacitor.

In an embodiment, an i-th switch converter further includes a primary switch group. The primary switch group and the i-th shared switch group are coupled to the i-th primary magnetic circuit in a full-bridge manner, i=1,...,N.

In an embodiment, the switch converter is configured to share two of the switch groups which are coupled to the primary magnetic circuit in a full-bridge manner.

In an embodiment, the primary magnetic circuit includes a primary winding and a resonance circuit; the primary magnetic circuit includes a resonance circuit; or the primary magnetic circuit includes a primary winding.

In an embodiment, the at least one switch group includes N switch groups. The at least one capacitor includes N-1 first capacitors and N-1 second capacitors, where N is greater than or equal to two. The N switch groups are sequentially coupled in series between two terminals of a first port. The N-1 first capacitors are respectively coupled with a second to a N-th switch groups in parallel. An i-th second capacitor is coupled between an intermediate node of an i-th switch group and an intermediate node of an (i+1)-th switch group, i=1,...,N.

In an embodiment, the at least one switch group includes N first switch groups and one second switch group. The at least one capacitor includes N first capacitors, one second capacitor and N third capacitors, where N is greater than or equal to two.

The N first switch groups are sequentially coupled in series between two terminals of a first port. The N first capacitors are respectively coupled with the N first switch groups in parallel. One terminal of an i-th third capacitor is coupled to an intermediate node of the second switch group, and another terminal of the i-th third capacitor is coupled to an intermediate node of an i-th first switch group. The second capacitor is coupled with the second switch group in parallel.

In an embodiment, the at least one capacitor further include at least one isolated capacitor coupled between one terminal of the second switch group and any one of coupling terminals of the N first capacitors.

In an embodiment, the at least one switch group includes N first switch groups, one second switch group and one third switch group. The at least one capacitor includes N first capacitors, one second capacitor and N third capacitors, where N is greater than or equal to two.

The N first switch groups are sequentially coupled in series between two terminals of a first port. An i-th first capacitor is coupled with an i-th first switch group in parallel. One terminal of an i-th third capacitor is coupled to an intermediate node of the third switch group, and another terminal of the i-th third capacitor is coupled to an intermediate node of an i-th first switch group, i=1,...,N. The second switch group is coupled with the third switch group in parallel. The second capacitor is coupled with the second switch group in parallel.

In an embodiment, the at least one capacitor further include at least one isolated capacitor coupled between the intermediate node of the second switch group and a coupling terminal of an i-th first capacitor.

According to the embodiments of the present disclosure, the switched capacitor converter is cascaded with at least one switch converter. In view of the feature that the switched capacitor converter includes multiple switch groups, each of the at least one switch converter is configured to share at least one of the switch groups of the switched capacitor converter, which can effectively reduce the number of circuit components and increase utilization of the circuit components. In addition, the sharing of the switch group brings no negative effect on the operation of the switched capacitor converter, thus the DC-DC converter according to the embodiments of the present disclosure achieves an adjustable smoothing output and an adjustable gain.

### BRIEF DESCRIPTION OF THE DRAWINGS

The above and other objects, features and advantages of the present disclosure are clearer by description of the embodiments of the present disclosure with reference to the drawings hereinafter.
Figure 1 is a circuit diagram of a DC-DC converter according to the conventional technology;
Figure 2 is a circuit diagram of a DC-DC converter according to a first embodiment of the present disclosure;
Figure 3 is a waveform diagram of switch control signals for PWM control according to a first embodiment of the present disclosure;
Figure 4 is a waveform diagram of switch control signals for another PWM control according to a first embodiment of the present disclosure;
Figure 5 is a waveform diagram of switch control signals for PFM control according to a first embodiment of the present disclosure;
Figure 6 is a circuit diagram of a variation of the DC-DC converter according to a first embodiment of the present disclosure;
Figure 7 is a circuit diagram of a DC-DC converter according to a second embodiment of the present disclosure;
Figure 8 is a circuit diagram of a DC-DC converter according to a third embodiment of the present disclosure;
Figure 9 is a circuit diagram of a DC-DC converter according to a fourth embodiment of the present disclosure;
Figure 10 is a circuit diagram of a DC-DC converter according to a fifth embodiment of the present disclosure; and
Figure 11 is a circuit diagram of a DC-DC converter according to a sixth embodiment of the present disclosure.

### DETAILED DESCRIPTION OF EMBODIMENTS

The present disclosure is described on the basis of the embodiments hereinafter, but the present disclosure is not limited to these embodiments. In the detailed description of the present disclosure hereinafter, numerous specific details are set forth. Those skilled in the art may understand the present disclosure without these specific details. To avoid obscuring the substance of the present disclosure, well-known methods, procedures, flows, elements and circuits are not described in detail.

In addition, those skilled in the art should understand that the drawings are provided herein for illustration, which are not drawn to scale.

In addition, it should be understood that in the following description, the term "circuit" indicates a conductive loop forming by at least one element or sub-circuit through electrical connections or electromagnetic connections. When referring to that an element or a circuit is "connected to" another element or that an element or a circuit is "connected between" two nodes, it may indicates that the element or the circuit is directly coupled or connected to another element or there is an intermediate element. The elements may be connected in a physical manner, a logical manner, or a combination thereof. In addition, when referring to that an element is "directly coupled" or "directly connected" to another element, it indicates that there is no intermediate element therebetween.

Unless otherwise stated, the terms "include", "comprise" or any other variations in the specification and claim are intended to be containing, rather than exclusive or exhaustive. That is, the terms indicate "including, but not limited to".

In the description of the present disclosure, it should be understood that the terms such as "the first" and "the second" herein are only used for description, rather than indicating or suggesting relative importance. Furthermore, in the description of the present disclosure, unless otherwise stated, the term "multiple" indicates two or more.

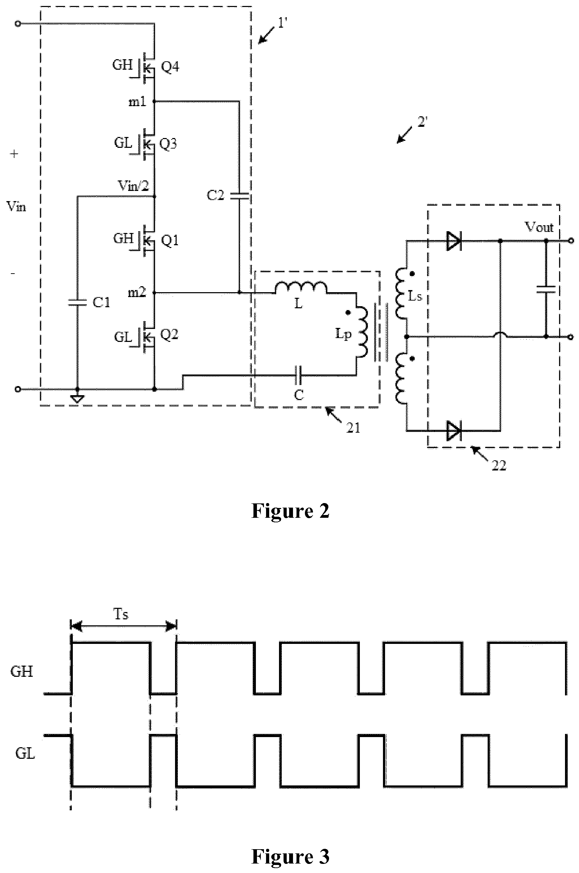

Figure 2 is a circuit diagram of a DC-DC converter according to a first embodiment of the present disclosure. As shown in Figure 2, the DC-DC converter according to the embodiment includes a non-isolated switched capacitor converter 1' and a switch converter 2'. The switch converter 2' shares a switch group in the switched capacitor converter 1'. The switched capacitor converter 1' includes two switch groups, that is, a switch group including switches Q1 and Q2 coupled in series and a switch group including switches Q3 and Q4 coupled in series. The two switch groups are sequentially coupled in series between two terminals of an input port. A common coupling point of two switches in each of the switch groups is defined as an intermediate node mi of the switch group, where i=1, 2.

In the embodiment, the switches Q1 to Q4 are metal-oxide-semiconductor field effect transistors (MOSFET). In addition, other electronically controlled switch devices such as a bipolar junction transistor (BJT) and an insulated gate bipolar translator (IGBT) may also be used as the switches in the embodiment.

The switched capacitor converter 1' further includes capacitors C1 and C2. The capacitor C1 is coupled in parallel with the switch group including the switches Q1 and Q2. One terminal of the capacitor C2 is coupled to the intermediate node m1, and the other terminal of the capacitor C2 is coupled to the intermediate node m2.

In the embodiment, the switch converter is a unidirectional power converter. The switch converter 2' includes a primary magnetic circuit 21. One terminal of the primary magnetic circuit 21 is coupled to the intermediate node m2 of the switch group including the switches Q1 and Q2, and the other terminal of the primary magnetic circuit 21 is coupled to one terminal of the switch group including the switches Q1 and Q2 (that is, a grounded terminal of an input port). Operation state of the primary magnetic circuit 21 is switched under control of the shared switch group to generate a varying current, thereby transmitting power to a secondary circuit. The switch converter 2' further includes a secondary winding Ls coupled to a primary winding Lp and a rectifier circuit 22. The secondary winding Ls is coupled to the primary magnetic circuit 21 to generate a varying current. The rectifier circuit 22 rectifies the varying current to generate a direct current voltage.

In the embodiment, the primary magnetic circuit includes a resonant inductor L, the primary winding Lp and a resonance capacitor C coupled in series. That is, the primary magnetic circuit includes the primary winding and an LC series resonant circuit. In this case, the switches Q1 and Q2 and the primary magnetic circuit 21 together form a primary circuit of an LLC resonant half-bridge converter. The switch converter 2' shares the switch group (including the switches Q1 and Q2) with the switched capacitor converter 1'. The primary magnetic circuit may also be other circuit forms such as an LCC resonant circuit.

In the switched capacitor converter 1', the switches Q1 and Q4 are controlled in response to a switch control signal GH, the switches Q2 and Q3 are controlled in response to a switch control signal GL. In the embodiment, description is made by taking a case that the switch control signal GH and switch control signal GL are mutually complementary as an example. That is, when the signal GH has a high level, the signal GL has a low level, and vice versa. The switches Q1 to Q4 are N-type MOSFETs. Therefore, in a case that the switch control signal GH has a high level and the switch control signal GL has a low level, the switches Q1 and Q4 are switched on, and the switches Q2 and Q3 are switched off. In this case, a loop starting from an input port and sequentially passing through the switch Q4, the capacitor C2, the switch Q1 and the capacitor C1 is formed, and the capacitors C1 and C2 are charged with an input voltage. In a case that the switch control signal GL has a high level and the switch control signal GH has a low level, the switches Q1 and Q4 are switched off, and the switches Q2 and Q3 are switched on. In this case, a loop including the switch Q2, the capacitor C2, the switch Q3 and the capacitor C1 is formed, electric energy stored in the capacitors C1 and C2 is used to supply power, and a voltage of each of the capacitors is a half of an input voltage Vin at the input port. In this way, the capacitors are discharged/charged repeatedly by continuously switching states of the switch groups, thereby achieving a substantial constant output.

It can be seen from the above description that, a ratio between an output voltage and an input voltage of the switched capacitor converter 1' is fixed and is independent from the duty cycle of the switch control signals GH or GL. An output voltage Vout of the switch converter 2' is determined based on a half of the input voltage Vin at the input port (Vin/2) and the duty cycles of the switch control signals of the two switches Q1 and Q2. Therefore, a control circuit (not shown in Figure 2) may be configured to adjust the duty cycles of the switch control signals GH and GL based on a desired output voltage, and maintain the switch control signals GH and GL complementary. The switched capacitor converter 1' may operate normally as long as the switch control signals GH and GL are mutually complementary. The switches Q1 and Q2 may be switched on/off alternatively by controlling the duty cycles of the switch control signals, to achieve power conversion at a second stage. With the second converter 2', voltage pulsation in the output of the switched capacitor converter 1' may be eliminated and a ratio between the output voltage and the input voltage may also be adjusted, thereby adjusting the gain of the whole DC-DC converter, to obtain an increased or reduced gain. In the embodiment, the gain of the switched capacitor converter 1' is 1/2, the gain of the switch converter 2' is less than 1, and thus a lower gain can be obtained with the switch converter 2'.

That is, in the switched capacitor converter 1', the switches Q1 and Q2 of the shared switch group are used to switch the states of the circuit, to charge and discharge the capacitors C1 and C2. In the switch converter 2', the switches Q1 and Q2 of the shared switch group are used as a main power switch and a synchronous rectification switch to control a duration that the inductor L stores energy and a duration that the inductor L releases energy. As described above, since the gain of the switched capacitor converter 1' is independent from the duty cycles of the switch control signals of the switches Q1 and Q2, only the switch converter 2' is affected when the duty cycles of the switch control signals are changed.

The control circuit may adjust the duty cycles of the switch control signals in various control manners, to adjust the state of the switch converter 2'. The control manners may include a pulse width modulation (PWM) manner, a pulse frequency modulation(PFM) manner and a combination of the PWM manner and the PFM manner.

Figure 3 is a waveform diagram of switch control signals for PWM control according to the first embodiment of the present disclosure. As shown in Figure 3, in each switch period Ts, the switch control signals GH and GL are mutually complementary. In a case that the switch period Ts is constant, the output voltage of the direct current-direct current converter may be adjusted by changing the duty cycle (for example, in a case that the switches are N-type MOSFETs, the duty cycle may be changed by changing duration of a high level in each switch period).

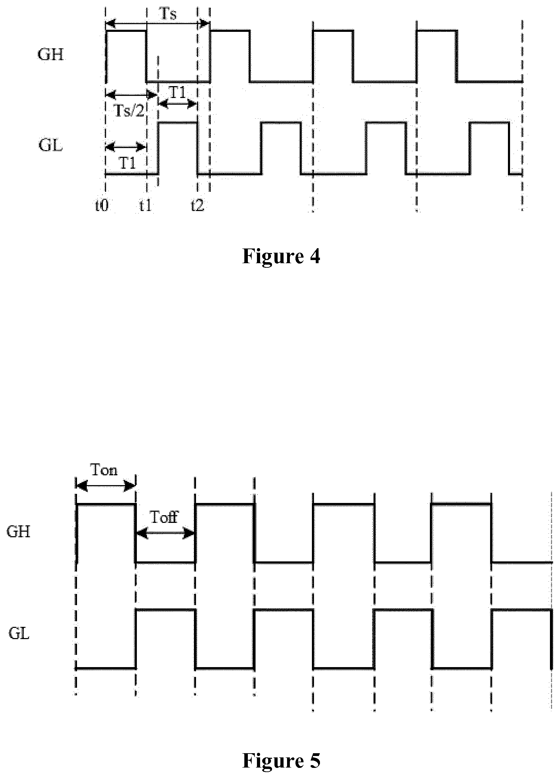

Figure 4 is a waveform diagram of switch control signals for another PWM control according to the first embodiment of the present disclosure. Different from that in Figure 3, the switch control signals GH and GL in Figure 4 are mutually symmetrical. This indicates that the switch control signals GH and GL have the same waveform and duty cycle, and different phases. For example, as shown in Figure 4, in a first switch period Ts, the signal GH remains at a high level for duration T1, which is started from time t0 to time t1, and the signal GL remains at a high level also for the duration T1, which is started from time Ts/2 to time t2. That is, the signal GL lags the signal GH by Ts/2. However, the signal GL and the signal GH have the same duty cycle. The symmetrical signals have a dead time period during which the switches of the switch groups switch. In the dead time period, the two switches of the switch group are both switched off to prevent the two switches from being both switched on during the switch. For the switch converter 2', power conversion may still be achieved by alternatively switching on/off the switches Q1 and Q2 in response to the switch control signals shown in Figure 4. By adjusting the duty cycles of the switch control signals, the gain is adjusted and a constant output voltage is achieved.

Figure 5 is a waveform diagram of switch control signals for PFM control according to the first embodiment of the present disclosure. As shown in Figure 5, for the switch control signals GH and GL, switch periods are not constant, and a switched-on duration Ton or a switched-off duration Toff is constant. The output voltage of the switched capacitor converter 2' may also be adjusted by adjusting the switch periods or changing the switch frequency.

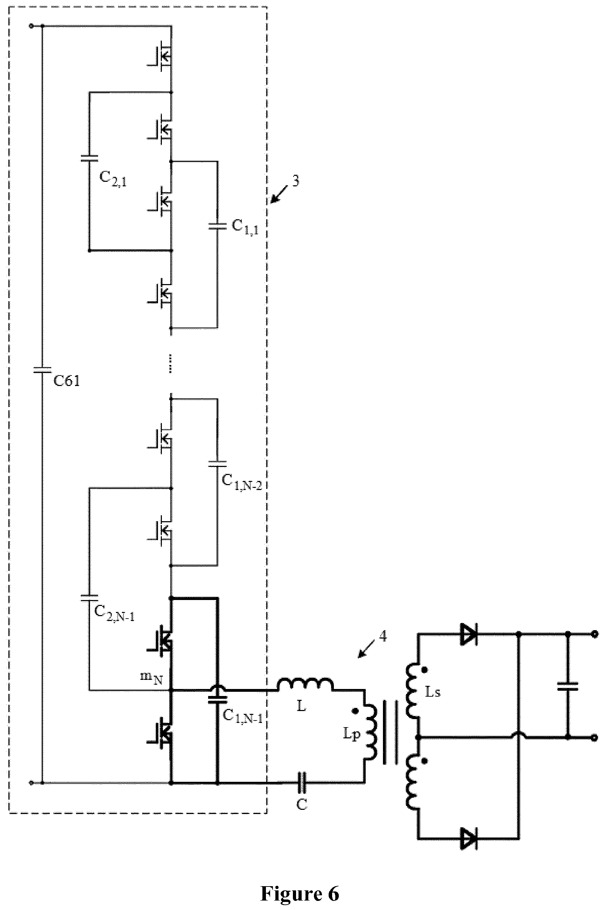

It should be noted that the number of the switch groups of the switched capacitor converter according to the first embodiment is not limited to two, which may be more than two based on a desired transformation ratio. Figure 6 is a circuit diagram of a variation of the DC-DC converter according to the first embodiment of the present disclosure. As shown in Figure 6, a switched capacitor converter 3 includes N switch groups. Each of the switch groups includes two switches coupled in series. The N switch groups are sequentially coupled in series between two terminals of an input port. The switched capacitor converter 3 further include capacitors C_{1,1} to C_{1,N-1} and C_{2,1} to C_{2,N-1}. The capacitors C_{1,1} to C_{1,N-1} are respectively coupled with a second to a N-th switch groups in parallel. Each of the capacitors C_{2,1} to C_{2,N-1} is coupled between intermediate nodes of two adjacent switch groups. That is, the capacitor C_{2,i} is coupled between an intermediate node mi of an i-th switch group and an intermediate node mi+i of an (i+1)-th switch group, where i=1,2,...N. As shown in Figure 6, an N-th switch group is shared by a switch converter 4. A primary magnetic circuit is coupled between an intermediate node m_{N} of the N-th switch group (that is, a switch group closest to the grounded terminal) and a grounded terminal of the input port. Optionally, any one of the N switch groups may be shared by the switch converter 4 to perform power conversion.

According to the embodiments of the present disclosure, the switched capacitor converter is cascaded with the switch converter. In view of the feature that the switched capacitor converter includes multiple switch groups, the switch converter is configured to share at least one of the switch groups of the switched capacitor converter, which can effectively reduce the number of circuit components and increase utilization of the circuit components. In addition, the sharing of the switch group brings no negative effect on the operation of the switched capacitor converter, thus the DC-DC converter according to the embodiments of the present disclosure achieves an adjustable smoothing output voltage and an adjustable gain.

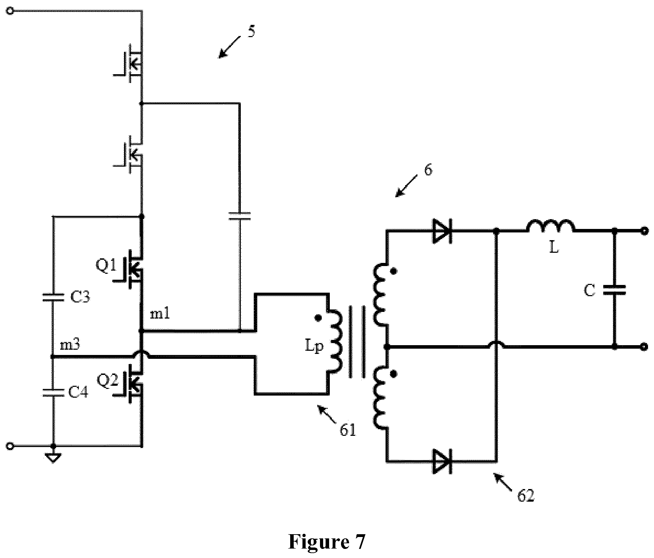

Moreover, the isolated switched capacitor converter may also be configured in other forms. Figure 7 is a circuit diagram of a DC-DC converter according to a second embodiment of the present disclosure. As shown in Figure 7, in the embodiment, a switched capacitor converter 5 and a switch converter 6 share a switch group including the switches Q1 and Q2. The switched capacitor converter 5 includes a first series capacitor C3 and a second series capacitor C4 which are coupled in series between two terminals of the switch group including the switches Q1 and Q2 and have a common coupling point m3. A primary magnetic circuit 61 of the switch converter 6 includes a primary winding Lp, two terminals of which are respectively coupled to an intermediate node m1 and the common coupling point m3. A secondary circuit 62 of the switch converter 6 includes a secondary rectifier circuit and a filter circuit. It can be seen that the capacitors C3 and C4 are coupled in series and one terminal of the primary magnetic circuit 61 is coupled to the common coupling point of the capacitors C3 and C4, such that an alternating current is generated with a voltage at two terminals of the primary winding as the switches Q1 and Q2 are alternatively switched on/off, thereby achieving transformer transmission via a transformer formed by the primary winding and the secondary winding.

In the above embodiment, the shared switch group is coupled to the primary magnetic circuit in a half-bridge manner, thereby outputting the alternating current. Optionally, the switches of the switch converter can be configured to form a full-bridge switch circuit.

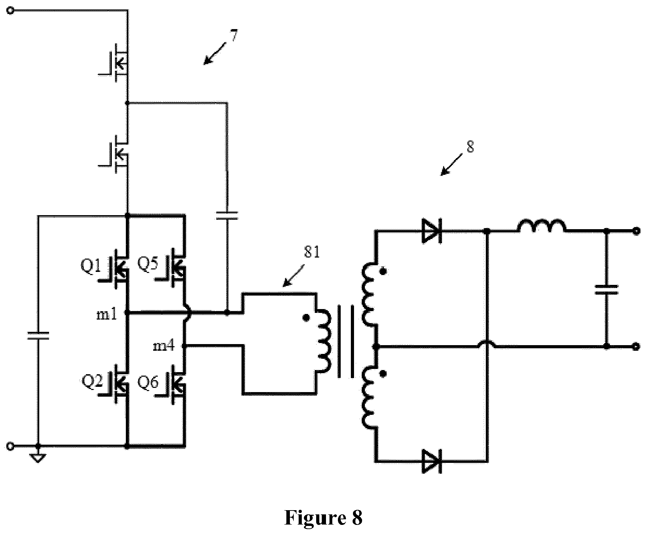

Figure 8 is a circuit diagram of a DC-DC converter according to a third embodiment of the present disclosure. As shown in Figure 8, in the embodiment, a structure of the switched capacitor converter 7 is the same as the structure described in the first embodiment. In addition, in addition to the primary magnetic circuit and the secondary circuit, the switch converter 8 further includes a primary switch group which includes switches Q5 and Q6 coupled in series. The primary switch group is coupled with the shared switch group (including the switches Q1 and Q2) in parallel. Two terminals of a primary magnetic circuit 81 are respectively coupled to an intermediate node m1 of the shared switch group and an intermediate node m4 of the primary switch group. That is, the shared switch group of the switched capacitor converter 7 and the primary switch group are coupled to the primary magnetic circuit 81 in a full-bridge manner. An output voltage of the switched capacitor converter 7 may be converted to an alternating current by controlling the above switch groups to be alternatively switched on/off, and then the alternating current is transmitted to the secondary circuit via the transformer.

In the embodiment of the present disclosure, the switch converter can perform the unidirectional power transmission from an input terminal to an output terminal, and a change at the output terminal may not result in a mutation at the input terminal. In this case, multiple switch converters may be provided, to respectively share multiple different switch groups.

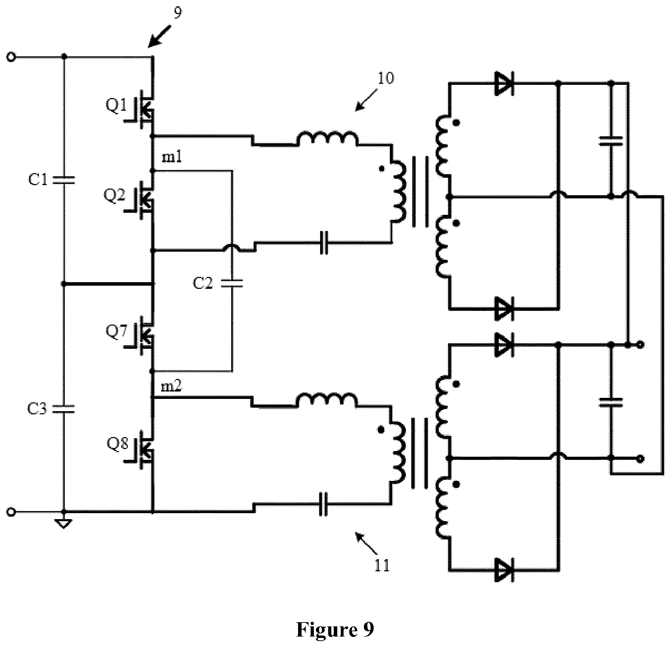

Figure 9 is a circuit diagram of a DC-DC converter according to a fourth embodiment of the present disclosure. As shown in Figure 9, the switched capacitor converter 9 according to the embodiment includes a switch group including switches Q1 and Q2, a switch group including switches Q7 and Q8, and capacitors C1, C2 and C3. The capacitor C1 is coupled with the switch group including the switches Q1 and Q2 in parallel. The capacitor C3 is coupled with the switch group including the switches Q7 and Q8 in parallel. The capacitor C2 is coupled between intermediate nodes m1 and m2. The switch converter 10 shares the switch group including the switches Q1 and Q2. The switch converter 11 shares the switch group including the switches Q7 and Q8. Output terminals of the switch converters 10 and 11 are coupled in parallel. In this way, the efficiency of the power conversion can be improved to some extent.

Optionally, in the embodiment, the switch converters 10 and 11 may also be coupled to two output ports separately.

In the above embodiments, the switched capacitor converter is a non-isolated switched capacitor converter. However, the switched capacitor converter may also be set as an isolated switched capacitor converter.

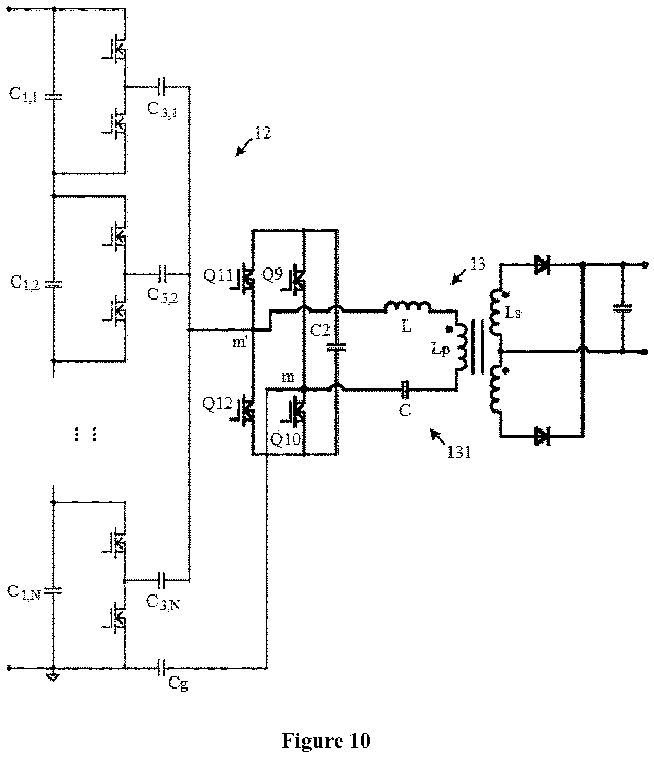

Figure 10 is a circuit diagram of a DC-DC converter according to a fifth embodiment of the present disclosure. As shown in Figure 10, the DC-DC converter according to the embodiment includes an isolated switched capacitor converter 12 and a switch converter 13. The switched capacitor converter 12 includes N first switch groups, one second switch group (including switches Q9 and Q10) and one third switch group (including switches Q11 and Q12), where N is greater than or equal to two. Each of the switch groups includes two switches coupled in series. The N first switch groups are sequentially coupled in series between two terminals of an input port. The second switch group is coupled between two terminals of an output port of the switched capacitor converter 12. The switched capacitor converter further includes capacitors C_{1,1} to C_{1,N}, a capacitor C2 and capacitors C_{3,1} to C_{3,N}. The capacitor C_{1,i} is coupled with an i-th first switch group in parallel, where i=1,2,...,N. The capacitor C2 is coupled with the second switch group in parallel. The capacitor C_{3,i} is coupled between an intermediate node mi of the i-th first switch group and an intermediate node m' of the third switch group. With the capacitors C_{3,1} to C_{3,N}, the switched capacitor converter 12 may isolate the input port from the output port effectively, thereby effectively restraining common-mode noises at the input port. In the embodiment, the switch converter 13 shares the second switch group and the third switch group. The second switch group includes the switches Q9 and Q10. The third switch group includes the switches Q11 and Q12. Two terminals of a primary magnetic circuit 131 are respectively coupled to the intermediate node m of the second switch group and the intermediate node m' of the third switch group.

In an embodiment, an isolated capacitor Cg may be further provided. As shown in Figure 10, the isolated capacitor Cg is coupled between a grounded terminal of the input port and the intermediate node m of the second switch group. Optionally, the isolated capacitor Cg may also be coupled between the intermediate node m of the second switch group and any one of coupling terminals of the capacitors C_{1,1} to C_{1,N}.

In the embodiment, the two switch groups are shared, to form a full-bridge LLC resonant converter. It should be understood that one switch group may be shared to form a half-bridge LLC resonant converter. In addition, an isolated switched capacitor converter with only one switch group at an output side may be used, and the switch group is shared to form the half-bridge LLC resonant converter.

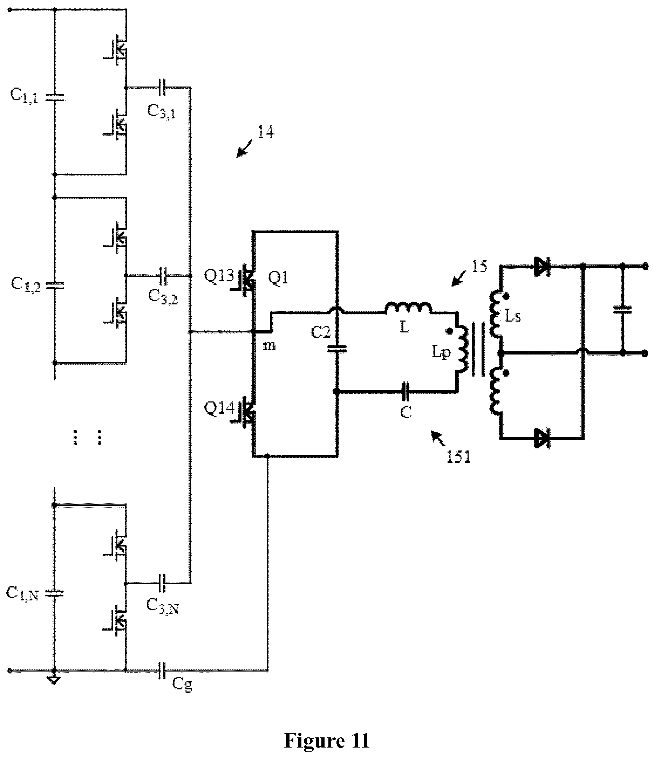

Figure 11 is a circuit diagram of a DC-DC converter according to a sixth embodiment of the present disclosure. As shown in Figure 11, the DC-DC converter according to the embodiment includes an isolated switched capacitor converter 14 and a switch converter 15. The switched capacitor converter 14 includes N first switch groups and one second switch group (including switches Q13 and Q14), where N is greater than or equal to two. Each of the switch groups includes two switches coupled in series. The N first switch groups are sequentially coupled in series between two terminals of an input port. The second switch group is coupled between two terminals of an output port of the switched capacitor converter 14. The switched capacitor converter 14 further includes capacitors C_{1,1} to C_{1,N}, a capacitor C2 and capacitors C_{3,1} to C_{3,N}. The capacitor C_{1,i} is coupled with an i-th first switch group in parallel, where i=1,2,...,N. The capacitor C2 is coupled with the second switch group in parallel. The capacitor C_{3,i} is coupled between an intermediate node mi of an i-th first switch group and an intermediate node m of the second switch group. In the embodiment, the switched capacitor converter 15 shares the second switch group. Two terminals of a primary magnetic circuit 151 are respectively coupled to the intermediate node m of the second switch group and one terminal of the second switch group.

In an embodiment, an isolated capacitor Cg may be provided. As shown in Figure 11, the isolated capacitor Cg is coupled between a grounded terminal of the input port and one terminal of the second switch group. Optionally, the isolated capacitor Cg may also be coupled between one terminal of the second switch group and any one of coupling terminals of the capacitors C_{1,1} to C_{1,N}.

In the embodiments of the present disclosure, a switched capacitor converter and a switch converter are cascaded to perform power conversion. In view of the feature that the switches in each of the switch groups of the switched capacitor converter are switched on/off alternatively, at least one switch group may be shared as at least one bridge arms of a switch converter, thereby effectively reducing the number of the switches, thus improving the utilization of devices.

In addition, a cascaded structure may also have advantages of the switched capacitor converter and the switch converter, such that the gain of the DC-DC converter can be changed, and the output voltage can be effectively smoothed.

The switched capacitor converter may be an isolated switched capacitor converter or a non-isolated switched capacitor converter. The switch converter may be a half-bridge converter, a full-bridge converter, an LLC resonant converter, an LC resonant converter or other topology which can achieve the unidirectional power transmission.

It should be noted that the description above only shows the preferred embodiments of the present disclosure, and is not intended to limit the present disclosure. For those skilled in the art, any modifications and changes may be made to the present disclosure. Any modifications, equivalent substitutions, improvements and the like made within the spirit and principles of the present disclosure should fall within the protection scope of the present disclosure.

## Claims

1. A direct current-direct current, DC-DC, converter, comprising:
a switched capacitor converter comprising at least one switch group and at least one capacitor wherein each of the at least one switch group comprises two switches coupled in series, and at least one of the capacitors is coupled with corresponding one of the switch groups in parallel; and
at least one switch converter, wherein each of the at least one switch converter comprises at least one primary magnetic circuit and is configured to share at least one of the switch groups, one terminal of the primary magnetic circuit is coupled to an intermediate node of the shared switch group, the intermediate node is a common coupling point of two switches of the shared switch group, wherein
the switch converter is an unidirectional power converter.

2. The DC-DC converter according to claim 1, further comprising:
a control circuit configured to control the at least one shared switch group in a pulse width modulation, PWM, manner, a pulse frequency modulation, PFM, manner or a combination of the PWM manner and the PFM manner to adjust duty cycles of the two switches of the shared switch group, to adjust an output voltage of the DC-DC converter based on a voltage conversion of the switched capacitor converter.

3. The DC-DC converter according to claim 2, wherein duty cycles of the two switches for each switch group in other switch groups respectively correspond to the duty cycles of the two switches in the shared switch group.

4. The DC-DC converter according to claim 1, wherein the switched capacitor converter is an isolated switched capacitor converter or a non-isolated switched capacitor converter.

5. The DC-DC converter according to claim 1, wherein the switch converter is configured to share one of the switch groups.

6. The DC-DC converter according to claim 5, wherein the at least one capacitor of the switched capacitor converter comprises a first capacitor coupled with the shared switch group in parallel, and
one terminal of the primary magnetic circuit is coupled to the intermediate node of the shared switch group, and another terminal of the primary magnetic circuit is coupled to one terminal of the shared switch group.

7. The DC-DC converter according to claim 5, wherein the at least one capacitor of the switched capacitor converter comprises a first series capacitor and a second series capacitor, wherein the first series capacitor and the second series capacitor are coupled in series between two terminals of the shared switch group, and
one terminal of the primary magnetic circuit is coupled to the intermediate node of the shared switch group, and another terminal of the primary magnetic circuit is coupled to a common coupling point of the first series capacitor and the second series capacitor.

8. The DC-DC converter according to claim 5, wherein the switch converter further comprises a primary switch group, wherein the primary switch group and the shared switch group are coupled to the primary magnetic circuit in a full-bridge manner.

9. The DC-DC converter according to claim 1, wherein the number of the at least one switch converter is N, wherein the N switch converters are configured to respectively share N switch groups, and N is greater than or equal to two.

10. The DC-DC converter according to claim 9, wherein the at least one capacitor of the switched capacitor converter comprises N first capacitors respectively coupled with the N shared switch groups in parallel, and
one terminal of each of the at least one primary magnetic circuit is coupled to an intermediate node of the corresponding shared switch group, and another terminal of the primary magnetic circuit is coupled to one terminal of the shared switch group.

11. The DC-DC converter according to claim 9, wherein the at least one capacitor of the switched capacitor converter comprises N first series capacitors and N second series capacitors, wherein an i-th first series capacitor and an i-th second series capacitor are coupled in series between two terminals of an i-th shared switch group, i=1,...,N, and
one terminal of an i-th primary magnetic circuit is coupled to an intermediate node of the i-th shared switch group, and another terminal of the i-th primary magnetic circuit is coupled to a common coupling point of the i-th first series capacitor and the i-th second series capacitor.

12. The DC-DC converter according to claim 9, wherein an i-th switch converter further comprises a primary switch group, wherein the primary switch group and an i-th shared switch group are coupled to an i-th primary magnetic circuit in a full-bridge manner, i=1,...,N.

13. The DC-DC converter according to claim 1, wherein the switch converter is configured to share two of the switch groups, wherein the two switch groups are coupled to the primary magnetic circuit in a full-bridge manner.

14. The DC-DC converter according to claim 1, wherein
the primary magnetic circuit comprises a primary winding and a resonance circuit; or
the primary magnetic circuit comprises a resonance circuit; or
the primary magnetic circuit comprises a primary winding.

15. The DC-DC converter according to claim 1, wherein the at least one switch group comprises N switch groups, the at least one capacitor comprises N-1 first capacitors and N-1 second capacitors, N is greater than or equal to two, and wherein
the N switch groups are sequentially coupled in series between two terminals of a first port, the N-1 first capacitors are respectively coupled with a second to a N-th switch groups in parallel, an i-th second capacitor is coupled between an intermediate node of an i-th switch group and an intermediate node of an (i+1)-th switch group, i=1,...,N.

16. The DC-DC converter according to claim 1, wherein the at least one switch group comprises N first switch groups and one second switch group, the at least one capacitor comprises N first capacitors, one second capacitor and N third capacitors, N is greater than or equal to two, and wherein
the N first switch groups are sequentially coupled in series between two terminals of a first port, the N first capacitors are respectively coupled with the N first switch groups in parallel, one terminal of an i-th third capacitor is coupled to an intermediate node of the second switch group, and another terminal of the i-th third capacitor is coupled to an intermediate node of an i-th first switch group, i=1,...,N, the second capacitor is coupled with the second switch group in parallel.

17. The DC-DC converter according to claim 16, wherein the at least one capacitor further comprises at least one isolated capacitor coupled between one terminal of the second switch group and any one of coupling terminals of the N first capacitors.

18. The DC-DC converter according to claim 1, wherein the at least one switch group comprises N first switch groups, one second switch group and one third switch group, the at least one capacitor comprises N first capacitors, one second capacitor and N third capacitors, N is greater than or equal to two, wherein
the N first switch groups are sequentially coupled in series between two terminals of a first port, an i-th first capacitor is coupled with an i-th first switch group in parallel, one terminal of an i-th third capacitor is coupled to an intermediate node of the third switch group, and another terminal of the i-th third capacitor is coupled to an intermediate node of an i-th first switch group, i=1,...,N, the second switch group is coupled with the third switch group in parallel, the second capacitor is coupled with the second switch group in parallel.

19. The DC-DC converter according to claim 18, wherein the at least one capacitor further comprise at least one isolated capacitor coupled between an intermediate node of the second switch group and a coupling terminal of an i-th first capacitor, i=1,...,N.
